# EUROPEAN PATENT APPLICATION

(11) **EP 0 578 133 A1**
(43) Date of publication of application: **12.01.1994**
(21) Application number: 93110527.4
(22) Date of filing: 01.07.1993
(51) Int. Cl.: A01K 5/01

(54) **Assembly for the eating of food, for animals**

(30) Priority: 08.07.1992 IT MI921656
(71) Applicant: INGEMEC S.r.L., I-20153 Milano (IT)
(72) Inventor: Gerli, Bruno, I-20153 Milano (IT); Gerli, Federico, I-20153 Milano (IT)
(74) Representative: Coloberti, Luigi

(57) **Abstract**

An assembly for the eating of food by animals comprising in combination: a bowl (11) and a non-slip mat (12) which extends on at least one side of the bowl (11) for a length sufficient to allow an animal (10) to rest its front paws; the bowl (11) and the mat (12) are moreover provided with reciprocal connecting mans designed to prevent the same bowl (11) from moving in relation to the mat (12), and the same mat (12) on which the weight of the animal (10) bears down during eating of the meal.

## Description

The present invention relates to an assembly for the eating of food by domestic pets, in particular dogs and cats, whereby eating of the meal by the animal is appropriately facilitated.

As is known, for the eating of meals by domestic pets, such as dogs and cats, simple bowls are currently used which are normally available commercially, and which are placed on the floor, allowing the animal to insert its muzzle to eat the meal.

It is nevertheless known that the animal, bearing down on the bowl with its muzzle in order to eat, tends to move it, making unpleasant noises and often upturning the bowl and consequently dirtying the floor. Moreover, when the food is of a certain consistency, the animal finds it difficult to eat the whole meal.

The object of the present invention is to provide an assembly for the eating of food by domestic pets, aimed at solving the abovementioned disadvantages.

More specifically, the object of the invention is to provide an assembly for the eating of food by animals, by means of which the animal uses its own weight to prevent the bowl from moving during eating of the meal.

A further object of the present invention is to provide an assembly as defined above, by means of which the animal is prevented from upturning the bowl and from upsetting or in any case from dispersing the food on the floor, for greater hygiene, particularly in closed environments.

A further object again of the invention is to provide an assembly for the eating of food by animals, as referred above, which can be adapted to bowls of any shape and size by means of suitable fittings according to the type of bowl to be used.

According to the invention an assembly is therefore provided for the eating of food by domestic pets, comprising in combination: a bowl for containing the food and a non-slip mat which extends on at least one side of the bowl for a length sufficient to enable the animal to rest its front paws, and in that the bowl and mat are provided with reciprocal hooking means, designed to prevent the bowl from moving in relation to the mat.

Some preferred embodiments of the assembly for the eating of food by animals, according to the invention, are to be illustrated hereinunder with reference to the accompanying drawings, in which:
- Fig. 1: is a perspective view of the assembly, illustrating the position of a dog during eating of the meal;
- Fig. 2: is a plan view of the assembly for eating food according to a first embodiment;
- Fig. 3: is an enlarged section along line 3-3 of figure 2;
- Fig.4: is a plan view of a second embodiment;
- Fig. 5: is a side view of figure 4;
- Fig. 6: is a plan view of a third embodiment;
- Fig. 7: is a cross section along line 7-7 of figure 6;
- Fig. 8: shows an exploded view of a fourth embodiment, particularly suitable for use with bowls already available commercially;
- Fig. 9: shows an exploded view of a fifth embodiment, again suitable for use with bowls already available commercially;
- Fig. 10: is a transverse section of the assembly in figure 9, in an assembled condition;
- Fig. 11: shows a variant on the solution in figure 9;
- Fig. 12: shows a sixth solution, again usable with bowls already available commercially;
- Fig. 13: is an enlarged section along line 12-12 of figure 1;
- Fig. 14: shows a variant on the solution of Figs. 11 and 12;
- Fig. 15: shows a final variant, again adaptable to bowls available commercially.

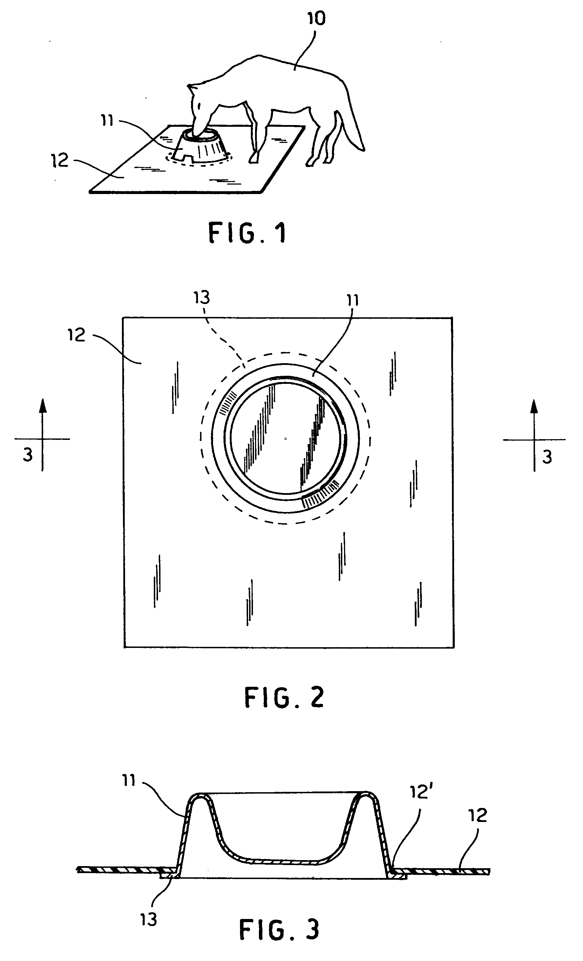

Figure 1 shows a dog 10 while eating its meal by means of an assembly formed by a bowl 11 and by a non-slip mat 12 according to the invention.

The non-slip mat 12 consists of sheet material, for example hydrorepellent plastic material, whose dimensions are such as to allow the dog to insert its muzzle into the bowl 11, after bearing down by means of its front paws, on the mat itself blocking by its own weight. Therefore, by suitably restraining the bowl 11 to the mat 12, the bowl is prevented from moving or from upturning while the animal is eating the meal, bearing down with its weight on the mat itself. By means of the assembly according to the invention, any food made to come out of the bowl by the animal which is eating is also prevented from spreading and dirtying the floor, being collected on the same non-slip mat. Therefore bowl 11 and mat 12 must be provided with suitable connecting means, preferably engageable and disengageable one with respect to the other, and suitable for preventing reciprocal movement.

A first preferred embodiment of the assembly for eating of food by animals is shown in figures 2 and 3 of the drawings.

As can be seen from said figures, the bowl 11, which can be of any desired shape, is provided at the base of its external wall with a peripheral flange 13 which is arranged beneath the mat 12, at a hole 12' in the same mat, through which the bowl 11 is inserted.

The hole 12' in the mat has a smaller diameter than the maximum diameter of the bowl, in the example the external diameter of the flange 13. It is therefore clear that in this way the bowl 11 is restrained by the mat and prevented from any movement on the floor when the animal 10 bears down with its own weight on the mat itself. Nevertheless the bowl 11 can be removed or replaced simply by removing it from the hole 12' of the mat.

The bowl 11 can be placed in the middle of the mat 12, which has a square shape, or a circular shape, or any other desired shape In order to limit the overall dimensions of the mat, and also to allow it to be arranged more suitably against a wall, the bowl 11 and the relative hole 12' are preferably placed in proximity to an edge of the mat, which can therefore protrude further from the opposite side. Finally the use of sheet material for manufacturing the mat 12 can allow the whole assembly with the mat folded or rolled up to be placed in a small space when not in use.

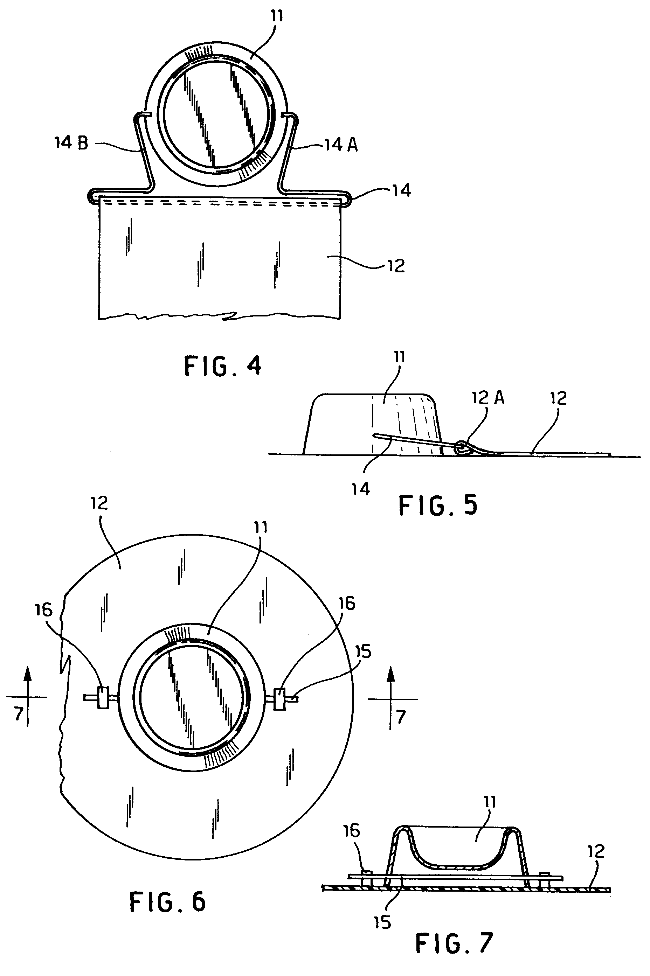

Figures 4 and 5 of the drawings show a second solution in which the mat 12 is arranged on one side of the bowl 11. In this case the mat 12 is connected to the bowl 11 by means of a metal wire bracket 14 which extends through a slot 12A on the edge of the mat, and which has elastically flexible arms 14A and 14B whose folded ends are inserted in corresponding holes in the external wall of the bowl 11.

Figures 6 and 7 show a third solution in which the bowl 11, whose shape is substantially identical to that of the previous examples, is attached to a mat 12, circular in shape, by means of a metal rod 15 which passes through aligned holes in the external wall of the bowl, being attached to the mat 12 by means for example of self-adhesive hooking elements 16, or by any other removable hooking device suitable for the use, for example a strip material known with the trade nome of "VELCRO".

In the case in figures 2 to 7, the bowl 11 and the mat 12 must be suitably manufactured or provided with appropriate hooking means, adequately conforming the bowl 11 with the restraining flange 13 or with the hooking holes of the bracket 14 or metal rod 15 mentioned previously.

The assembly for the eating of food according to the invention is nevertheless adaptable also to standard bowls already available commercially. Some examples are shown in the remaining figures 4 to 15 of the accompanying drawings.

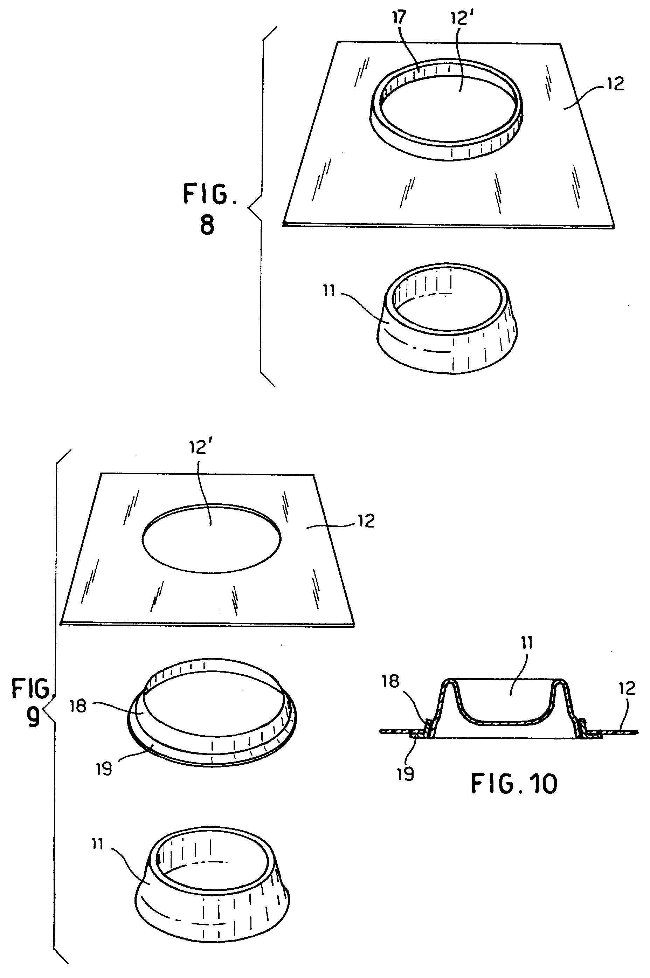

More particularly figure 8 shows an exploded view of a standard bowl 11, with a truncated cone shape, which is combined with a mat 12 formed with a hole 14 provided with an annular raised edge 17 which adapts to the base of the peripheral wall of the bowl 11.

Another solution is shown in figures 9 and 10. In this case use is made of a mat 12, for example quite similar to the mat in figure 2, providing an annular element 18 formed with a peripheral flange 19. The annular element 18 adapts to the external surface of the lower edge of the bowl, as shown in figure 10, this enabling the flange 19 to be arranged beneath the mat 12 at the opening 12' in the mat. In this way a simple and highly advantageous solution is provided for a type of bowl available commercially, which conforms to the previous solution of figures 2 and 3.

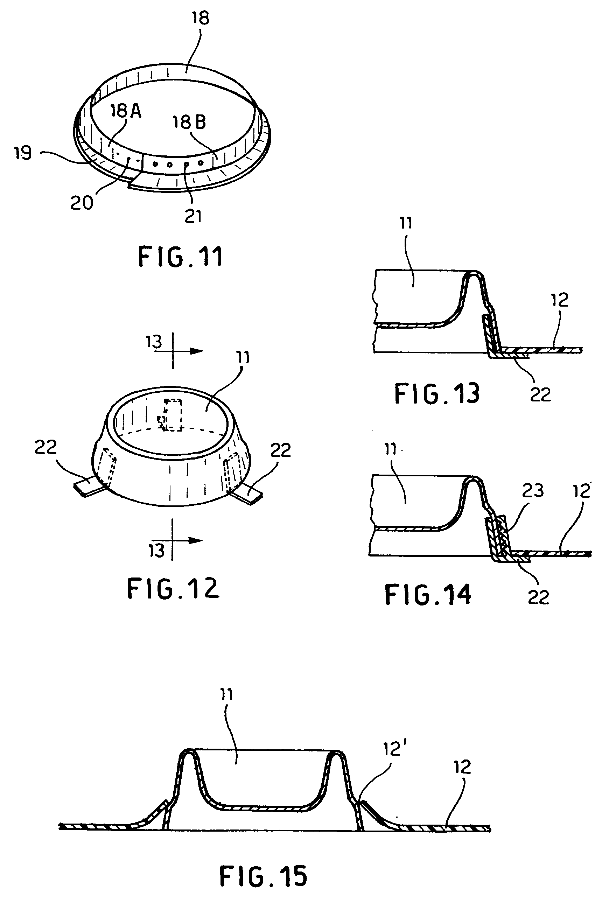

Figure 11 shows a variant on the construction of the annular element 18 of figure 9. In the previous case the annular element 18 has a fixed dimension which necessarily has to adapt to the external surface of the wall of the bowl. According to the example in figure 11, the annular element 18 is given a variable dimension and is adjustable to adapt to bowls of different sizes. Therefore the annular element 18 in figure 11 is cut on one side so that the two opposite ends 18A and 18B can be partially superimposed, aligning holes 20 and 21 for a screw or check pin to pass through.

Figures 12 and 13 show a sixth solution whereby a bowl 11, normally available commercially, is fitted with several bracket or L-shaped elements 22, distanced at an angle, one of whose wings fixes in or is glued internally or externally to the bowl 11, while the other folded wing projects radially from the edge of the bowl to be arranged beneath the mat 12 in a fully equivalent manner to the flange 13 in the example in figures 2 and 3, as shown in the enlarged detail in figure 13.

Figure 14 shows a variant on the previous example whereby the L-shaped element 22 is conformed with a pair of jaws 23 between which the edge of the external wall of the bowl 11 is inserted.

Finally figure 15 shows a last solution whereby the mat 12 is formed with a hole 12' whose diameter is smaller than the largest base diameter of the bowl so that, through the same flexibility of the plastic material with which the mat 12 is made, the latter is arranged with the edge of the hole 12' tilted upwards, adhering to the external surface of the wall of the bowl for containing food, as shown.

From what has been said and shown in the accompanying drawings, it is therefore clear that a bowl assembly is provided for the eating of meals by an animal and provided with a non-slip mat to which the bowl can be appropriately connected removably, so as to prevent the bowl from moving in relation to the mat on which the weight of the animal bears down while eating the meal.

It is clear therefore that, as part of the idea of a general solution described previously, other different solutions are possible both as regards the shape and the dimensions of the mat and of the bowl, and as regards the materials and the systems of connecting the parts without thereby departing from what is claimed.

## Claims

1. Assembly for the eating of food by animals characterised by comprising in combination: a bowl (11) for containing food and a non-slip mat (12); said mat (12) extending on at least one side of the bowl (11) for a lenght sufficient to allow the front paws of the animal (10) to rest, and in that bowl (11) and mat (12) are provided with reciprocal hooking means (12', 13, 14, 15, 16, 17, 18) to prevent relative movement between then and the entire assembly through the action of the weight which the animal (10) exerts on the mat (12) while eating the meal.

2. Assembly according to claim 1 wherein the bowl (11) is provided with a peripheral wall, characterised in that said hooking means comprise a hole (12') in the mat (12) for the insertion of the bowl (11), as well as a peripheral flange (13) along at least part of the lower edge of the external wall (11) of the bowl itself, said flange (13) having a diameter greater than the diameter of the hole (12') of the mat (12) to be arranged beneath the mat (12) itself.

3. Assembly according to claim 1 in which said bowl (11) is provided with a peripheral wall, characterised in that said hooking means comprise bracket elements (22) attached in angularly spaced positions to the external wall of the bowl (11), each bracked element (22) having a wing extending radially outwards to be arranged beneath the mat (12) at a hole (12') for the bowl (11).

4. Assembly according to claim 3, characterised in that said bracket elements (22) and/or the peripheral edge of the bowl (11) comprise hooking or reciprocal fixing means (23).

5. Assembly according to claim 1, in which said bowl (11) has a peripheral wall, characterised in that said hooking means comprise a hole (12') for the bowl (11) provided in the mat (12), as well as an annular element (18) which adapts externally to the bowl (11), said annular element (18) being provided with a peripheral flange (19) arranged beneath the mat (12) along the edge of the hole.

6. Assembly according to claim 5, characterised in that said annular element (18) has a fixed dimension.

7. Assembly according to claim 5, characterised in that said annular element (18) has a variable dimension being composed of an annular element cut on one side whose superimposable ends (18A, 18B) are provided with adjustable hooking means (20).

8. Assembly according to claim 1 in which the bowl (11) is provided with a peripheral wall whose size increases towards the support base, characterised in that said hooking means comprise a hole (12') in the non-slip mat (12), having a diameter smaller than the maximum diameter of the peripheral wall in proximity to the support base of the aforementioned bowl (11).

9. Assembly according to any one of the previous claims, characterised in that said hole (12') is formed in proximity to an edge of the mat (12).

10. Assembly according to claim 1, characterised in that said hooking means comprise an element in metal wire attached to the mat which engages in axially aligned lateral holes in the peripheral wall of the food containing containing bowl (11).

11. Assembly according to one or more previous claims, characterised in that the mat (12) has a square or circular shape which extends along at least part of the peripheral edge of the external wall of the food containing bowl (11).
